# EUROPEAN PATENT APPLICATION

(11) **EP 4 406 998 A1**
(43) Date of publication of application: **31.07.2024**
(21) Application number: 22873273.1
(22) Date of filing: 19.09.2022
(51) Int. Cl.: C08J 11/08, C10G 11/02, C08F 210/00, B01J 19/24

(54) **METHOD AND DEVICE FOR PRODUCING HYDROCARBONS FROM POLYMER WASTE**

(30) Priority: 23.09.2021 RU 2021127920
(71) Applicant: VIPS Engineering Limited Liability Company, Saint-Petersburg, 191167 (RU)
(72) Inventor: PANFEROV, Andrey Anatolievich, Saint-Petersburg, Pushkin, 196603 (RU); ORONOV, Mark Igorevich, Saint-Petersburg, 195196 (RU); SMIRNOV, Dmitry Evgenievich, Saint-Petersburg, 191116 (RU)
(74) Representative: Cabinet Chaillot
(86) International application number: PCT/RU2022/050298
(87) International publication number: WO 2023/048600

(57) **Abstract**

The invention relates to a method for producing hydrocarbons from polymer waste, comprising: a) heating pre-crushed polymer waste in the presence of a mixture of liquid hydrocarbons to a temperature sufficient to convert at least one target polymer from the polymer waste to solution, but a lower transition temperature to solution for the remaining components of the polymer waste, to produce a polymer-containing mixture comprising a solution of at least one target polymer in the mixture liquid hydrocarbons, and b) catalytic cracking of the polymer-containing mixture in the presence of an ultrafine catalyst at a temperature from at least 360° C to produce a mixture of liquid and gaseous hydrocarbons.

## Description

### FIELD OF TECHNOLOGY TO WHICH THE INVENTION RELATES

The invention relates to a method for obtaining hydrocarbons from polymer waste by catalytic cracking of a polymer-containing mixture with the preliminary production of a polymer-containing mixture from polymer waste containing a solution of the target polymer in a mixture of liquid hydrocarbons.

### STATE OF THE TECHNOLOGY

Due to the large amount of polymer waste, the issue of recycling polymer waste to avoid environmental pollution is currently acute. It is also desirable to obtain products from polymer waste that can be further used in various fields of technology.

Patent US4175211 (IPC C07C 3/26, published 20.11.1979) describes a method for processing polymer waste, including melting polymer waste in the presence of heavy recycled gas oil followed by catalytic cracking using a dispersed catalyst. One of the disadvantages of this method is the lack of effective separation of target polymers from non-target products. Another disadvantage of the prior technology method is the need for catalytic cracking at high temperatures, which leads to significantly increased energy requirements for the process and to a reduced yield of the final commercial product. The next disadvantage of this method is the direct loading of the dispersed catalyst in the form of particles into the catalytic cracking reactor, in which the catalyst losses associated with its carryover by technological flows are inevitable, which requires a higher catalyst consumption and, in general, negatively affects the overall efficiency of the process.

### ESSENCE OF THE INVENTION

The invention is based on the task of creating a method for obtaining hydrocarbons from polymer waste, which, due to the effective separation of target polymers from non-target products and due to the use of a catalyst that provides the ability to carry out catalytic cracking at low temperatures, makes it possible to significantly reduce the requirements for the energy of the process and increase the yield of the final commercial product.

One of the technical results of the present invention is to provide a method for obtaining hydrocarbons from polymer waste with high efficiency, by converting polymers contained in polymer waste.

Another technical result of the present invention is to ensure the efficient use of a catalyst in catalytic cracking of a polymer-containing mixture.

Another technical result of the present invention is the efficient purification/selection of target polymers from polymer wastes.

This problem is solved, and the technical results are achieved by means of a method for obtaining hydrocarbons from polymer wastes according to the present invention.

The present invention relates to a method for producing hydrocarbons from polymer wastes, comprising:
A) heating the pre-shredded polymer waste in the presence of a mixture of liquid hydrocarbons to a temperature sufficient for the transition of at least one target polymer from the polymer waste to solution, but less than the conversion temperature of the remaining components of the polymer waste to solution, to obtain a polymer-containing mixture containing a solution of at least one target polymer in a mixture of liquid hydrocarbons;
B) catalytic cracking of a polymer-containing mixture in the presence of an ultrafine catalyst at a temperature of at least 360° C to obtain a mixture of liquid and gaseous hydrocarbons.

In one embodiment, a method is provided wherein the target polymer is polyolefin.

In one embodiment, a method is provided in which the transition temperature of polymer waste fractions containing polyethylene, polypropylene to the liquid phase is maintained in the range of 200 to 250 °C.

In one embodiment, a method is provided wherein the undissolved impurities comprise fluorine and nitrogen-containing compounds.

In one embodiment, a method is provided that further comprises filtration and/or separation of the polymer-containing mixture prior to its delivery to the catalytic cracking step with the separation of the remaining polymer waste fractions containing mechanical and undissolved impurities in the liquid hydrocarbon mixture.

In one embodiment, a method is provided in which the catalyst is produced by dispersing in a homogenizer the catalyst precursor in a mixture of liquid hydrocarbons, the precursor being an organometallic compound. In one embodiment, the liquid hydrocarbon mixture may be a mixture of liquid hydrocarbons from step b).

In one embodiment, a method is provided in which an organometallic compound is selected from a group consisting of metal-containing salts of C16-C32 carboxylic acids and mixtures thereof, wherein the metal is selected from a group consisting of nickel, cobalt, molybdenum.

In one embodiment, a method is provided in which the catalyst has a particle size of less than 8 angstroms.

In one embodiment, a method is provided wherein the polyolefin is polyethylene or polypropylene.

In one embodiment, a method is provided that further comprises step (c) returning at least a portion of the liquid hydrocarbon mixture produced in step (b) to step (a).

In one embodiment, a method is provided wherein step b) a recirculation circuit is provided for a polymer-containing mixture with a catalyst applied.

The present invention also provides a method for isolating a target polymer from polymer waste, comprising:
A) provision of shredded polymer waste,
B) heating the shredded polymer waste in the presence of a mixture of liquid hydrocarbons to a temperature sufficient for the transition of at least one target polymer from the polymer waste to solution, but less than the conversion temperature of the remaining components of the polymer waste into solution, resulting in a polymer-containing mixture containing a solution of at least one target polymer in the mixture of liquid hydrocarbons.

In one embodiment, a method is provided wherein the liquid hydrocarbon mixture is a liquid hydrocarbon mixture obtained by catalytic cracking of a polymer-containing mixture.

In one embodiment, a method is provided that further comprises filtration and/or separation of the polymer-containing mixture with separation from it of the remaining polymer waste fractions containing mechanical and undissolved impurities in the liquid hydrocarbon mixture.

In one embodiment, a method is provided wherein the liquid hydrocarbon mixture is heavy hydrocarbon fractions produced by catalytic cracking of the polymer-containing mixture.

In one embodiment, a method is provided wherein the target polymer is polyolefin.

Further, the present invention provides a method for catalytic cracking of a polymer-containing mixture obtained from polymer waste, the method comprising:
A) provision of a polymer-containing mixture comprising at least one polymer,
B) catalytic cracking of a polymer-containing mixture in the presence of an ultrafine catalyst at a temperature of at least 360°C to obtain a mixture of liquid and gaseous hydrocarbons,

Moreover, the catalyst is obtained by dispersing the catalyst precursor in a homogenizer in a mixture of liquid hydrocarbons.

In one embodiment, a method is provided wherein the liquid hydrocarbon mixture is a liquid hydrocarbon mixture obtained by catalytic cracking of a polymer-containing mixture.

In one embodiment, a method is provided wherein the liquid hydrocarbon mixture is heavy hydrocarbon fractions produced by catalytic cracking of the polymer-containing mixture.

In one embodiment, a method is provided that further comprises a recirculation circuit for a polymer-containing mixture with a catalyst applied.

In addition, the present invention relates to a device to produce hydrocarbons from polymer waste, comprising:
A mixing reactor configured to heat the pre-shredded polymer waste in the presence of a liquid hydrocarbon mixture to a temperature sufficient for the transition of at least one target polymer from the polymer waste to solution, but a lower transition temperature to solution for the remaining components of the polymer waste, to obtain a polymer-containing mixture containing a solution of at least one target polymer in a mixture of liquid hydrocarbons,
an evaporator reactor configured to receive a polymer-containing mixture from a mixing reactor and catalytic cracking of the polymer-containing mixture in the presence of an ultra-dispersed catalyst at a temperature of at least 360° C to produce a mixture of liquid and gaseous hydrocarbons, and
A homogenizer made with the ability to disperse the catalyst precursor in a mixture of liquid hydrocarbons for supply to the evaporator reactor.

In one embodiment, a device is provided that further comprises a filter and/or a first separator configured to receive a polymer-containing mixture from a mixer reactor and separate impurities from it.

In one embodiment, a device is provided that additionally includes a heat exchanger designed to receive a polymer-containing mixture from a mixer reactor with additional heating. The heat exchanger is designed to receive the steam-gas mixture from the evaporator reactor and ensure its cooling.

In one embodiment, a device is provided that additionally includes a fire heating furnace configured to receive a polymer-containing mixture with an introduced catalyst, wherein the device provides a recirculation circuit for the polymer-containing mixture with the introduced catalyst from the evaporator reactor to the firing furnace and back to the evaporator reactor.

According to one embodiment, a device is provided, which additionally includes a second separator made with the possibility of receiving a vapor-gas mixture from an evaporator reactor with its separation into fractions to obtain a mixture of liquid hydrocarbons, wherein the device provides a first circuit for feeding a mixture of liquid hydrocarbons, separated from the steam-gas mixture in the separator, to the reactor-mixer and a second supply circuit for a mixture of liquid hydrocarbons separated from the vapor-gas mixture in separator, into an evaporator reactor.

### BRIEF DESCRIPTION OF THE DRAWINGS

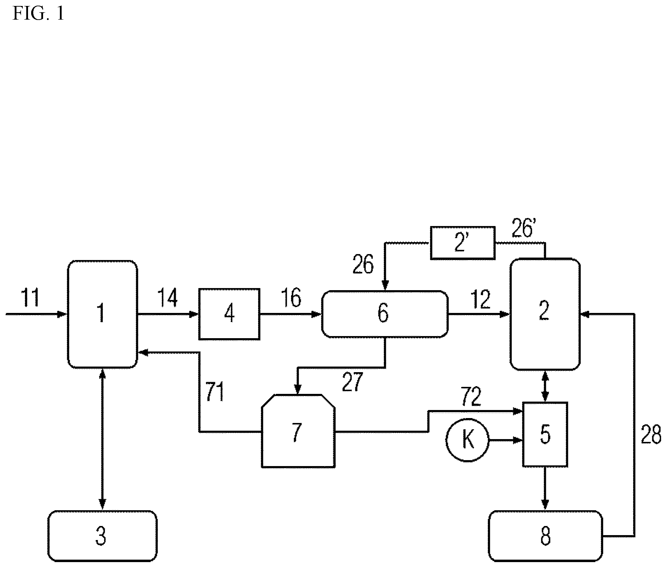

Fig. 1 illustrates a simplified block diagram of a method for producing hydrocarbons from polymeric wastes of the present invention.

### DETAILED DESCRIPTION OF THE INVENTION

The raw materials for the method according to the present invention are polymer wastes of various types and purposes, including, but not limited to, polymer containers for various purposes, packaging of various products, and other household and industrial polymer waste.

The raw material is subjected to initial purification from large undesirable components, impurities with subsequent grinding in shredders. Further, the crushed raw material is cleaned of fine metal impurities, e.g., by means of separator(s), e.g., magnetic separator(s), followed by treatment in a press and crusher, and drying, e.g., in drum-cascade drying, to remove moisture by means of hot air while ensuring a low moisture content, in particular up to 5% by weight, preferably less than 3% by weight.

The raw materials processed as described above are transported, for example, by a screw conveyor along line 11 to at least one reactor 1, in particular the mixing reactor 1. The steps of the method described above are well known and understood by one skilled in the technology and are therefore not described in detail herein.

In reactor 1, the polymer feedstock is melted in the presence of a liquid hydrocarbon mixture to produce a polymer-containing mixture comprising a solution of at least one target polymer in the liquid hydrocarbon mixture.

In particular, the pre-shredded polymer waste in the presence of a liquid hydrocarbon mixture is heated to a temperature sufficient to allow the transition of at least one target polymer from the polymer waste to solution, but a lower transition temperature to solution of the remaining components of the polymer waste, including polymers other than the target polymer(s), in order to obtain a polymer-containing mixture comprising a solution of at least one target polymer in the liquid mixture. In non-limiting embodiments, heating is carried out and the temperature in the reactor is between 200 and 250 °C. It is understood that the temperature range of heating in the reactor can be varied depending on the target polymers and the nature and composition of the polymer waste.

The inventors of the present invention have found that the application of melting polymer waste in a mixture of liquid hydrocarbons to provide a polymer-containing mixture containing a solution of the target polymer in a mixture of liquid hydrocarbons allows the selection of at least one target polymer by selectively dissolving it in a mixture of liquid hydrocarbons, thereby ensuring the purification of the raw material from non-target components. The application of this temperature also additionally ensures the selection of at least one target polymer.

In general, according to the present invention, a polymer-containing mixture is essentially a solution comprising at least one target polymer and a mixture of liquid hydrocarbons. In particular, the polymer-containing mixture may be a melt whose viscosity is reduced by the inclusion of a mixture of liquid hydrocarbons. Due to the indicated inclusion of the mixture of liquid hydrocarbons, it is possible to transport the polymer-containing mixture by pumps and subsequent mechanical filtration to separate undesirable impurities, for example, particles of paper, cardboard, metal, as well as particles of other polymers insoluble under these conditions.

In general, according to the present invention, the target polymer is polyolefin, in particular polyethylene, polypropylene, or a mixture thereof. However, the present invention is not limited to these polymers, and other polyolefin polymers, e.g., polybutylene, may be used, depending on the nature and composition of the polymer waste. In general, according to the present invention, the liquid hydrocarbon mixture is a heavy hydrocarbon fraction obtained by catalytic cracking of a polymer-containing mixture. At the start of the process of the process of the present invention, it is possible to use a single solvent as a mixture of liquid hydrocarbons, e.g., diesel fuel, in particular low-sulphur diesel fuel.

The temperature in the reactor 1 is brought to the required value and maintained due to the circulation of the coolant heated in the furnace 3 of the fire heating.

After selection of the target polymers in the reactor 1 to provide improved purification of the polymer-containing mixture, the polymer-containing mixture is sent along line 14 for filtration to the filter 4 and/or separation to a separator (not shown) for the separation of undesirable impurities.

After filtration, the polymer-containing mixture produced in reactor 1 is transported, for example, by a pump (not shown) along lines 16 and 12 to the evaporator reactor 2 for catalytic cracking.

In evaporator reactor 2, the polymer-containing mixture undergoes catalytic cracking.

Together with the polymer-containing mixture, a catalyst is also fed into the evaporator reactor 2. According to the present invention, the catalyst is a precursor to the K catalyst that is dispersed to an ultrafine state by homogenizer 5 in a mixture of liquid hydrocarbons. Hereinafter, in the present invention, the ultrafine state refers to particles that are less than 100 nanometres in size. This term is used in this field of technology, which follows, for example, from the open-source Wikipedia.

The mixture of the catalyst precursor K and the liquid hydrocarbon mixture may be a solution, lyosol, or dispersion. The precursor K of the catalyst in the mixture of liquid hydrocarbons is converted into catalyst particles when exposed to high temperature in the evaporator reactor 2, which in turn participate in the catalytic cracking process.

The inventors have found that the use of this method of obtaining a catalyst and feeding it into the reactor avoids catalyst losses associated with feeding the catalyst directly into the reactor. Also, it seems that the use of homogenizer 5 makes it possible to break down the micelles formed during normal dissolution, which, in turn, makes it possible to reduce the size of catalyst particles formed as a result of the thermal decomposition of the catalyst precursor K to a size of less than 8 angstroms, in particular, 1-8 angstroms, while the use of such small catalyst particle sizes allows to increase the number of active sites of the catalyst and increase the lifetime of the catalyst. This is because the agglomeration of such particles is much slower at the initial stage.

The use of an ultrafine catalyst makes it possible to place catalyst particles essentially in the entire working volume of the reactor. The inventors have found that this allows the catalytic cracking process to be carried out at low temperatures, at which, according to the prior art, catalytic cracking is impossible or extremely inefficient.

Catalytic cracking of the polymer-containing mixture according to the invention is carried out at a temperature of 360-425°C, preferably at a temperature of 400-425°C. In a non-limiting embodiment, the products of the catalytic cracking reaction include paraffins, isoparaffins, aromatic compounds, naphthenes, olefins. In particular, the composition of the products of the catalytic cracking reaction includes 30 to 50 Mac.% of paraffins, 5 to 10 Mac.% of isoparaffins, 20 to 30 Mac.% of aromatic compounds, 5 to 10 Mac.% of naphthenes, 5 to 10 Mac.% of olefins. However, a person skilled in the technology will understand that the products of the catalytic cracking reaction depend on the nature and composition of the polymer waste, as well as the temperature regime of the process.

In general, according to the present invention, the mixture of liquid hydrocarbons used in the preparation of the catalyst is heavy hydrocarbon fractions obtained by catalytic cracking of the polymer-containing mixture. However, other applicable liquid hydrocarbons can also be used, e.g. diesel fuel, in particular low-sulphur diesel.

Heating of the evaporator reactor 2 can be carried out by means of a fire heating furnace 8. The polymer-containing mixture produced in the reactor 1 may be fed into the evaporator reactor 2 through the firing furnace 8 to heat it. A person skilled in the technology will appreciate that the mixture can be heated by other methods known in the art, e.g., by means of a heat exchanger. After the firing furnace 8, the polymer-containing mixture is directed, for example, through a pipeline to the evaporator reactor 2, whereby the mixture of catalyst precursor K is added to the pipeline and sent to the evaporator reactor 2. It is also possible to feed this mixture of catalyst precursor K directly into the evaporator reactor 2. The polymer-containing mixture subjected to a catalytic cracking process in the evaporator reactor 2 and containing catalyst particles may be sent to the firing furnace 8 and then sent back to the evaporator reactor 2 via line 28 with a recirculation circuit which may be closed. In addition, the use of this melt superheating scheme using a recirculation circuit avoids significant overheating of the mixture in the firing furnace 8 and does not require other methods of maintaining the temperature of the cubic residue of the evaporator reactor 2. Also, the catalyst particle can only leave the evaporator reactor 2 with a cubic residue after it has reached a significant particle size. Thus, due to the provision of a recirculation loop in the reactor 2, the catalyst accumulates, where the same catalyst particle repeatedly passes through the firing furnace 8 and the evaporator reactor 2 during its lifetime. Due to this, it is possible to increase the efficiency of the catalyst and the efficiency of the process.

In general, the precursor K of the catalyst is an organometallic compound, in particular, a metal-containing salt of C16-C32 carboxylic acids or mixtures thereof, the metal being selected from the group consisting of nickel, cobalt, molybdenum.

The mixture of liquid hydrocarbons used in the dissolution of polymer waste and the production of a catalyst may be heavy hydrocarbon fractions obtained by catalytic cracking of a polymer-containing mixture having a boiling point above 200°C, in particular, above 225°C, and an initial boiling point from 300 °C. In a non-limiting embodiment, the vapor-gas mixture obtained by cracking the polymer-containing mixture, at least one separator 7 shall be routed along line 27 for separation into gas phase, light liquid fractions and heavy liquid fractions. At the same time, a part of the heavy fractions can be returned to the technological process for the above purposes along lines (circuits) 71 and 72, the rest is mixed with light liquid fractions to obtain a hydrocarbon liquid, which is a product for further use. In a non-limiting embodiment, the vapour-gas mixture obtained by cracking the polymer-containing mixture can be directed along line 26' to an additional 2' isomerization reactor, in which catalytic processes are carried out to isomerize the hydrocarbon structure towards isocomponents and/or dewax (destruct) normal paraffins. The 2' isomerization reactor can be a catalytic reactor with a heterogeneous porous catalyst of the ZSM type, the MFI type and the Similar.

The inventors of the present invention have found that the use of an additional 2' isomerization reactor further improves the performance of the resulting products and additionally contributes to the production of hydrocarbons from polymer waste with high efficiency. In a non-limiting embodiment, the vapor-gas mixture produced by cracking the polymer-containing mixture and being isomerized in the isomerization reactor 2' may be sent via line 26 to the heat exchanger 6, to which the polymer-containing mixture from the reactor 1 is also directed, for heat exchange, in which, respectively, the polymer-containing mixture is subjected to additional heating and the vapor-gas mixture is cooled to improve separation into individual fractions, this allows you to further increase the efficiency of the process. The vapor-gas mixture produced by cracking the polymer-containing mixture may also be sent directly to the heat exchanger 6 in the absence of the isomerization reactor 2' or in parallel with it.

The inventors of the present invention have also found that the most optimal conditions for catalytic cracking of polyolefins are a temperature of 380 to 425 °C, a pressure from minus 0.1 to 5 MPa excessive, preferably minus 0.1 to 0.5 MPa, and a catalyst concentration from 0.005 to 0.02% Mac. (for metal). These conditions make it possible to further increase the efficiency of the process.

In a non-limiting embodiment, because of catalytic cracking of a polymer-containing mixture, in particular containing polyolefin(s), a wide fraction of hydrocarbons from methane to hydrocarbons with a boiling point from more than 400 °C of various group compositions are obtained: olefins, paraffins, aromatic compounds, as well as hydrogen, CO, CO₂. In a non-limiting embodiment, the following ratio between the fractions is obtained: gas fraction 5-15% Mac., low-boiling fraction nk-225°C 20-30% Mac. and high-boiling fraction 150-kk °C 50-80% Mac.

The following are examples of a method for obtaining hydrocarbons from polymer wastes according to the invention.

### Examples

Polymer-containing raw materials were loaded into the mixer reactor and was carried out its melting with the provision of a solution of polymer-containing raw materials in a mixture of liquid hydrocarbons. The temperature in the digester reactor was maintained in the range of 200-250 °C. The crushed polyolefin raw materials were continuously or in batches loaded into the mixing reactor until the polyolefins were completely dissolved in the liquid hydrocarbon mixture and then sent for filtration to separate impurities. The consumption of raw materials was 0.5 hour⁻¹. Polymer waste containing polyethylene (PE) was used as a raw material. Next, the resulting solution was sent to the evaporator reactor for catalytic cracking. The conditions and results of catalytic cracking are shown in Table 1.

**Table 1**

| Example | T-ra, S | R, MPa (izb) | Concentration of metal, % Mac. | Conversion PE, % | Output, Mac.% | | |
|---|---|---|---|---|---|---|---|
| | | | | | Gas (S1-C5) | nk-225 °C* | 150-kk °C* |
| 1 | 370 | 0.1 | 0.015 Ni | 87.1 | 3.5 | 19.1 | 77.4 |
| 2 | 435 | 0.8 | 0.0075 Co | 93.3 | 16.3 | 30.1 | 53.6 |
| 3 | 410 | 1.3 | 0.01 Mo | 90.5 | 12.7 | 33.4 | 53.9 |
| 4 | 390 | 0.9 | 0.001 Ni | 88.3 | 7.7 | 22.4 | 69.9 |
| 5 | 400 | 0.7 | 3.5 Mo | 89.2 | 10.4 | 28.5 | 61.1 |
| 6 | 385 | 0.5 | 0.33 | 96.2 | 5.1 | 20.3 | 74.6 |
| | | | Co+0.033 | | | | |
| | | | Ni+0.02 Mo | | | | |
| 7 | 400 | -0.1 | 1.53 Ni | 95. 4 | 7.5 | 9.8 | 82.7 |

| | | | | | | | |
|---|---|---|---|---|---|---|---|
| nk-225°C - fraction with boiling end 225°C 150 kk °C - fraction with the beginning of boiling 150 °C | | | | | | | |

The presented examples show that by using the method of the present invention, it is possible to provide an efficient method for obtaining hydrocarbons from polymer waste (high PE conversion) with optimal use of a catalyst.

## Claims

1. A method for obtaining hydrocarbons from polymer feedstock, including:
A) separation of at least one target polymer from a polymeric feedstock, comprising heating the polymeric feedstock in the presence of a mixture of liquid hydrocarbons to a temperature sufficient for the transition of the target polymers to solution, but less than the transition temperature to the solution of the non-target components, to produce a polymer-containing mixture comprising a solution of at least one target polymer in a mixture of liquid hydrocarbons;
B) catalytic cracking in the liquid phase of a polymer-containing mixture containing a solution of target polymers in a mixture of liquid hydrocarbons, in the presence of an ultrafine catalyst to obtain a mixture of liquid and gaseous products.

2. The method according to claim 1, wherein the target polymers are polyolefins, preferably polyethylene and/or polypropylene.

3. The method according to claim 2, wherein the transition temperature of polymeric raw material fractions containing polyethylene and/or polypropylene to the liquid phase is maintained in the range from 200 to 250 °C.

4. A method according to claims 1-3, wherein the undissolved impurities contain fluorine and nitrogen-containing compounds.

5. A method according to any of claims 1-4, additionally including filtration and/or separation of the polymer-containing mixture prior to its delivery to the catalytic cracking stage with the separation from it of the remaining fractions of polymeric raw materials containing mechanical and undissolved impurities in the mixture of liquid hydrocarbons.

6. A method according to any of claims 1-5, in which the catalyst is obtained by dispersing in a homogenizer of the catalyst precursor in a mixture of liquid hydrocarbons, wherein the precursor is an organometallic compound.

7. The method according to claim 6, wherein the organometallic compound is selected from a group consisting of metal-containing salts C16-C32 of carboxylic acids and mixtures thereof, wherein the metal is selected from a group consisting of nickel, cobalt, molybdenum.

8. A method according to any of claims 1-7, wherein the catalyst has a particle size of less than 8 angstroms.

9. The method according to claim 1, wherein the catalytic cracking in step b) is carried out at a temperature from 380 to 425 °C, a pressure from minus 0.1 to 0.5 MPa and catalyst concentrations from 0.005 to 0.02% Mac.

10. The method according to claim 1, further comprising step (c) returning at least a portion of the liquid hydrocarbon mixture produced in step (b) to step a).

11. The method according to claim 6, wherein the liquid hydrocarbon mixture is a mixture of liquid hydrocarbons from step b).

12. The method according to claim 1, wherein, in step b) provide a recirculation circuit for the polymer-containing mixture with the introduced catalyst.

13. A method for isolating target polymers from polymer raw materials, including:
A) provision of crushed polymer raw materials,
B) heating of the crushed polymer raw material in the presence of a mixture of liquid hydrocarbons to a temperature sufficient for the transition of the target polymers from the polymeric raw material to the solution, but less than the conversion temperature of the non-target components of the polymer raw material into solution, with the production of a polymer-containing mixture containing a solution of at least one target polymer in a mixture of liquid hydrocarbons,
wherein the mixture of liquid hydrocarbons is a heavy hydrocarbon fraction having a boiling point above 225°C and obtained by separating in a separator a vapor-gas mixture obtained by catalytic cracking of a polymer-containing mixture containing a solution of at least one target polymer in mixture of liquid hydrocarbons and that obtained in step b).

14. The method according to claim 13, further comprising filtration and/or separation of the polymer-containing mixture with the separation from it of the remaining fractions of polymeric raw materials containing mechanical and undissolved impurities in the mixture of liquid hydrocarbons.

15. The method according to claim 13, wherein the target polymers are polyolefins.

16. The method of catalytic cracking of a polymer-containing mixture obtained from polymeric raw materials, the method includes:
A) providing a polymer-containing mixture comprising a solution of at least one polymer in a mixture of liquid hydrocarbons,
B) catalytic cracking of a polymer-containing mixture containing a solution of at least one target polymer in a mixture of liquid hydrocarbons in the presence of an ultrafine catalyst at a temperature from at least 360° C, producing a mixture of liquid and gaseous hydrocarbons and discharging it as a vapor-gas mixture,
Moreover, the catalyst is obtained by dispersing the catalyst precursor in a homogenizer in a mixture of liquid hydrocarbons.

17. The method according to claim 16, wherein the liquid hydrocarbon mixture is a mixture of liquid hydrocarbons obtained by catalytic cracking of the polymer-containing mixture.

18. The method according to claim 16, wherein the liquid hydrocarbon mixture is a heavy hydrocarbon fraction having a boiling point above 225° C and obtained by catalytic cracking of the polymer-containing mixture.

19. The method according to claim 16, further comprising a recirculation circuit for the polymer-containing mixture with the introduced catalyst.

20. The method according to claim 16, wherein the catalytic cracking in step b) is carried out at a temperature from 380 to 425 °C, a pressure of minus 0.1 to 0.5 MPa and catalyst concentrations from 0.005 to 0.02 Mac.

21. A device to produce hydrocarbons from polymer raw materials, including:
A mixing reactor designed to heat the pre-ground polymer feedstock in the presence of a mixture of liquid hydrocarbons to a temperature sufficient for the transition of the target polymers from the polymeric raw material to the solution, but less than the conversion temperature of the non-target components of the polymer feedstock into solution, to obtain a polymer-containing mixture containing a solution of at least one target polymer in a mixture of liquid hydrocarbons,
An evaporator reactor configured to receive a polymer-containing mixture comprising a solution of at least one target polymer in a mixture of liquid hydrocarbons from a mixing reactor and perform catalytic cracking of the polymer-containing mixture in the presence of an ultrafine catalyst at a temperature from at least 360° C. to produce a mixture of liquid and gaseous hydrocarbons, and
A homogenizer made with the ability to disperse the catalyst precursor in a mixture of liquid hydrocarbons for supply to the evaporator reactor.

22. The apparatus according to claim 21, further comprising a filter and/or a first separator, configured to receive a polymer-containing mixture comprising a solution of at least one target polymer in a mixture of liquid hydrocarbons from the mixer reactor and separate impurities therefrom.

23. The device according to claim 21, further comprising a vapor phase catalytic reactor configured to receive a vapor-gas mixture from an evaporator reactor.

24. The apparatus according to claim 21 or claim 23, further comprising a heat exchanger configured to receive the vapor-gas mixture from the mixer reactor and/or catalytic reactor and provide additional heating thereof.

25. The apparatus according to clzim 24, wherein the heat exchanger is configured to receive the vapor-gas mixture from the evaporator and/or catalytic reactor and provide cooling thereof.

26. The device according to claim 21, additionally including a fire heating furnace configured to receive a polymer-containing mixture with a catalyst introduced, wherein the device provides a recirculation circuit for the polymer-containing mixture with the introduced catalyst from the evaporator reactor to the firing furnace and back to the evaporator reactor.

27. The device according to claim 21, additionally comprising a second separator configured to receive the vapor-gas mixture from the evaporator reactor and ensure its separation into fractions to obtain a mixture of liquid hydrocarbons, wherein the device provides a first circuit for feeding the liquid hydrocarbon mixture separated from the vapor-gas mixture in the separator to the mixer reactor and a second supply circuit for the liquid hydrocarbon mixture separated from the vapor-gas mixture in the separator, into the evaporator reactor.

28. A method for obtaining hydrocarbons from polymer feedstock, including:
A) production of a solution of target polymers in a mixture of liquid hydrocarbons in a digester reactor, where the polymeric raw materials are added to the mixture of liquid hydrocarbons and heated to ensure the dissolution of the target polymers in the mixture of liquid hydrocarbons,
B) filtration and/or separation of the polymer-containing mixture with the separation of mechanical impurities and undissolved non-target fractions of polymer raw materials,
C) catalytic cracking of a solution of target polymers in a mixture of liquid hydrocarbons in an evaporator reactor in the presence of a catalyst in an ultrafine state,
D) catalytic effect on the vapor-gas mixture obtained during cracking in a catalytic reactor containing a heterogeneous catalyst,
moreover, the catalyst used at stage c) cracking is formed directly in the evaporator reactor because of the supply of a catalyst precursor solution in a mixture of liquid hydrocarbons into the reactor.

29. The method according to claim 28, wherein the target polymers are polyolefins, preferably polyethylene and/or polypropylene.

30. The method according to claim 29, wherein the transition temperature of the target polymer feedstock fractions containing polyethylene and/or polypropylene to the liquid phase is maintained in the range from 200 to 250 °C.

31. A method according to any of claims 28-30, wherein the catalyst precursor is an organometallic compound selected from a group consisting of metal-containing salts of carboxylic acids C16-C32 and mixtures thereof, wherein the metal is selected from a group consisting of nickel, cobalt, molybdenum.

32. The method according to claim 28, wherein catalytic cracking in step c) is carried out at a temperature from 380 to 425 °C, a pressure from minus 0.1 to 0.5 MPa and catalyst concentrations from 0.005 to 0.02% Mac.

33. The method according to claim 28, wherein the liquid hydrocarbon mixture is a mixture of liquid hydrocarbons from step c).

34. The method according to claim 28, wherein, in step c) provide a recirculation circuit for the polymer-containing mixture with the introduced catalyst.
